# EUROPÄISCHE PATENTSCHRIFT

(11) **EP 0 866 928 B1**
(45) Veröffentlichungstag und Bekanntmachung des Hinweises auf die Patenterteilung: **18.08.1999**
(21) Anmeldenummer: 96943035.4
(22) Anmeldetag: 05.12.1996
(51) Int. Cl.: F16H 61/00

(54) **GETRIEBESTEUERUNG FÜR EIN SYNCHRO-SHUTTLE-GETRIEBE ODER LASTSCHALTGETRIEBE**
GEAR CONTROL SYSTEM FOR A SYNCHRO-SHUTTLE GEAR OR POWER SHIFT GEAR
COMMANDE DE BOITE DE VITESSES A SYNCHRO-BALADEUR OU BOITE DE VITESSES COUPLABLE SOUS CHARGE

(30) Priorität: 14.12.1995 DE 19546630
(43) Veröffentlichungstag der Anmeldung: 30.09.1998
(73) Patentinhaber: ZF FRIEDRICHSHAFEN Aktiengesellschaft, 88038 Friedrichshafen (DE)
(72) Erfinder: RIEDHAMMER, Michael, D-88697 Bermatingen (DE)
(74) Vertreter: Zietlow, Karl-Peter
(86) Internationale Anmeldenummer: EP9605426
(87) Internationale Veröffentlichungsnummer: WO9721942

(56) Entgegenhaltungen:
- DE-A- 3 117 276
- GB-A- 2 038 964
- US-A- 3 606 906
- US-A- 4 041 972

## Beschreibung

Die Erfindung betrifft eine Getriebesteuerung für ein Synchro-Shuttle-Getriebe oder Lastschaltgetriebe nach der im Oberbegriff von Anspruch 1 näher definierten Art.

Bei Arbeitsmaschinen, wie z. B. Baggerladern, werden in der Praxis Gruppengetriebe, die pro Gang mindestens zwei betätigte Schaltelemente benötigen, eingesetzt. Bei diesen bekannten Gruppengetrieben handelt es sich entweder um Synchrongetriebe bzw. sogenannte Synchro-Shuttle-Getriebe mit hydraulisch betätigbaren Schaltelementen nur für die Fahrtrichtung oder um Lastschaltgetriebe bzw. Vollastschaltgetriebe, deren Getriebeaufbau neben Schaltelementen für die Fahrtrichtungswahl zusätzliche Schaltelemente aufweist, mit denen weitere Übersetzungsverhältnisse beispielsweise bei der Vorwärtsfahrt eingestellt werden können.

Die zur Steuerung dieser Getriebebauarten eingesetzten Steuerblöcke unterscheiden sich vor allem darin, daß bei den Synchrongetrieben aus Sicherheitsgründen ein spezielles Leerlaufventil erforderlich ist, mittels dem, abhängig von bestimmten Randbedingungen im Fahrzeug bzw. im Getriebe, jedoch unabhängig von dessen augenblicklichem Zustand, ein Leerlauf eingestellt werden kann. Zur Steuerung der bekannten Lastschaltgetriebe hingegen ist in der Getriebesteuerung ein eigenes Umschaltventil erforderlich, mittels dem zwischen mehreren Gangstufen für eine Fahrtrichtung unter Last umgeschaltet werden kann.

Nachteilhafterweise sind somit für diese Getriebebau arten unterschiedliche Steuerblöcke mit unterschiedlichen Schaltventilen und Schaltelementen erforderlich.

Durch die uneinheitliche konstruktive Ausgestaltung der Getriebesteuerungen ergeben sich, bezogen auf die Stückzahl, hohe Fertigungskosten für die einzelnen Schaltventile und Schaltelemente.

Die GB 2 038 964 A offenbart ein Getriebe mit Schaltelementen für Vorwärts- und Rückwärtsfahrt und eine Getriebesteuerung mit Schalteinrichtungen für die Betätigung eines Schaltventils zur Fahrtrichtungswahl.

Der vorliegenden Erfindung liegt daher die Aufgabe zugrunde, eine vereinfachte Getriebesteuerung mit universell einsetzbaren Steuer- und Schaltelementen, die sowohl für ein Synchro-Shuttle-Getriebe als auch für ein Lastschaltgetriebe geeignet sind, zu schaffen.

Die Aufgabe wird mit einem auch die kennzeichnenden Merkmale des Hauptanspruchs aufweisenden, gattungsgemäßen Getriebe gelöst.

Erfindungsgemäß wird diese Aufgabe dadurch gelöst, daß zwischen den Schaltelementen für eine Vorwärtsfahrt bzw. eine Rückwärtsfahrt und dem von den Schalteinrichtungen betätigbaren Schaltventil zur Fahrtrichtungswahl ein Steuerventil angeordnet ist, das über eine weitere Schalteinrichtung betätigbar ist, wobei das Steuerventil wahlweise als Neutralstellungs- bzw. Leerlaufventil bei einem Synchro-Shuttle-Getriebe oder als Umschaltventil für die Schaltelemente für eine Vorwärtsfahrt bei einem Lastschaltgetriebe einsetzbar ist, wobei die Anschlußöffnung des Steuerungsventils derart ausgebildet ist, daß das Steuerventil sowohl in einem Synchro-Shuttle-Getriebe als auch einem Lastschaltgetriebe eingesetzt werden kann. Bei einem Synchro-Shuttle-Getriebe ist die Öffnung des Steuerventiles durch ein Absperrteil gesperrt. Bei einem Lastschaltgetriebe ist die Anschlußöffnung des Steuerventiles mit einem weiteren Schaltelement zur Vorwärtsfahrt verbunden.

Mit der konstruktiv vereinfachten erfindungsgemäßen Getriebesteuerung kann vorteilhafterweise ein gemeinsamer Steuerblock unverändert sowohl in einem Synchro-Shuttle-Getriebe als auch in einem Lastschaltgetriebe eingesetzt werden.

Es ist weiterhin vorteilhaft, daß durch die erfindungsgemäße Getriebesteuerung keine zusätzlichen Bauteile benötigt werden, sondern nur die ohnehin notwendigen und bereits vorhandenen Bauteile in beiden Getriebeversionen benutzt werden, wodurch die Fertigungskosten deutlich gesenkt werden können.

Die Verwendung von einheitlichen Bauteilen bei beiden Getriebeausführungen ermöglicht eine Stückzahlbündelung, durch welche die Gestaltung und Fertigung der einzelnen Bauteile besonders kostengünstig ausgeführt werden kann.

Zudem wird durch die vereinheitlichte Ausführung von Getriebebauteilen die Teilebeschaffung und Teilebevorratung erheblich vereinfacht und kostengünstiger.

Weitere Vorteile und vorteilhafte Ausbildungen der Erfindung ergeben sich aus den Unteransprüchen und aus dem nachfolgend anhand der Zeichnung prinzipmäßig beschriebenen Ausführungsbeispiel.

Es zeigt:
- Fig. 1: eine Prinzipdarstellung einer Getriebesteuerung eines Synchro-Shuttle-Getriebes für Arbeitsmaschinen und
- Fig. 2: eine Prinzipdarstellung einer Getriebesteuerung eines Lastschaltgetriebes für Arbeitsmaschinen.

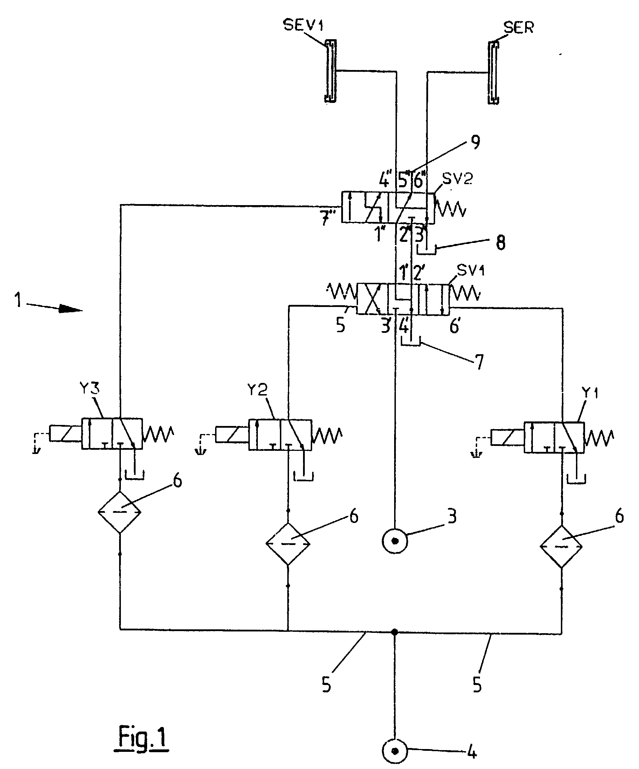

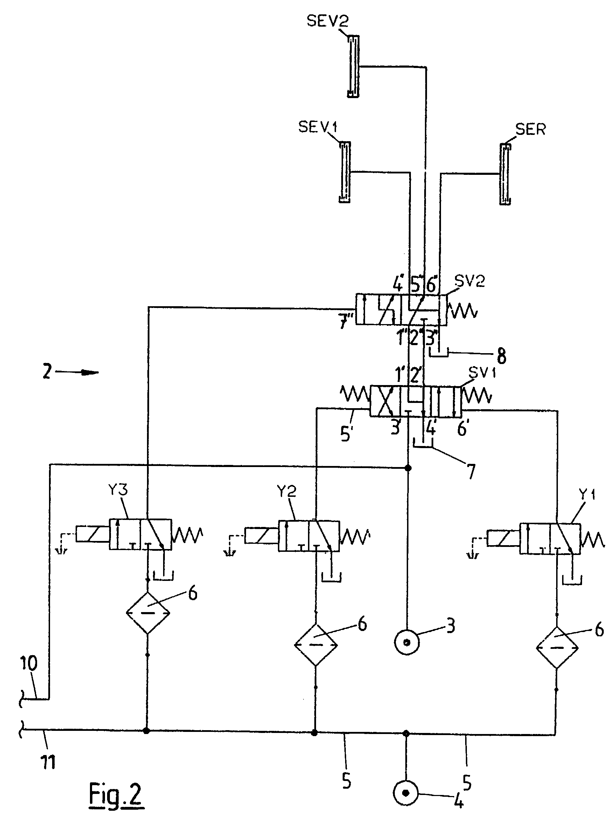

Bezug nehmend auf Fig. 1 und Fig. 2 ist eine Getriebesteuerung für Arbeitsmaschinen, insbesondere Baggerlader, mit Schaltelementen SEV1, SEV2 für eine Vorwärtsfahrt und mit einem Schaltelement SER für eine Rückwärts fahrt dargestellt, wobei Fig. 1 schematisch die Getriebesteuerung eines Synchrongetriebes bzw. Synchro-Shuttle-Getriebes 1 und Fig. 2 eine gleichartige Getriebesteuerung bei einem Vollastschaltgetriebe 2 zeigt.

Bei beiden Getriebebauarten werden die Schaltelemente SEV1, SEV2, SER hydraulisch mit Druck aus einer externen Druckquelle 3 beaufschlagt. Zwischen der externen Druckquelle 3 und den Schaltelementen SEV1, SEV2, SER ist jeweils ein Schaltventil SV1 zur Fahrtrichtungswahl und ein Steuerventil SV2 angeordnet. Das Schaltventil SV1 wird über zwei als elektromagnetische Ventile ausgebildete Schalteinrichtungen Y1, Y2 und das Steuerventil SV2 über eine weitere als elektromagnetisches Ventil ausgebildete Schalteinrichtung Y3 betätigt. Die elektromagnetischen Ventile Y1, Y2 und Y3 sind dazu über Druckleitungen 5 mit einem Vorsteuerdruck aus einer weiteren Druckquelle 4 beaufschlagbar, wobei in den Druckleitungen 5 zwischen den elektromagnetischen Ventilen Y1, Y2, Y3 und der Druckquelle 4 für den Vorsteuerdruck jeweils ein Zulauf filter 6 angeordnet ist.

Somit kann in vorteilhafter Weise auf die Schaltelemente SEV1, SEV2 und SER ein anderer Druck aufgebracht werden als auf die elektromagnetischen Ventile Y1, Y2 und Y3.

In einer anderen, nicht dargestellten Ausführung kann die Getriebesteuerung auch mit nur einer Druckquelle ausgebildet sein, wobei dann ein Druckminderventil erforderlich ist.

Das Schaltventil SV1, welches über eine Anschlußöffnung 3' mit der Druckquelle 3, über Anschlußöffnungen 5' und 6' mit den elektromagnetischen Ventilen Y1 und Y2 und über Anschlußöffnungen 1' und 2' mit dem Steuerventil SV2 verbunden ist sowie eine mit einem Tank 7 verbundene Anschluß- bzw. Auslaßöffnung 4' zur Abführung von Druckmitteln aufweist, hat in beiden Getriebebauarten jeweils die gleiche Aufgabe, nämlich von einer Vorwärtsfahrt auf eine Rückwärtsfahrt bzw. umgekehrt umzuschalten.

Das bei beiden Getriebebauarten ebenfalls konstruktiv identisch ausgestaltete Steuerventil SV2 hat dagegen in dem Synchro-Shuttle-Getriebe 1 nach Fig. 1 eine andere Aufgabe als in dem Vollastschaltgetriebe 2 nach Fig. 2. So dient das Steuerventil SV2 bei dem Synchro-Shuttle-Getriebe 1 als Neutralstellungs- bzw. Leerlaufventil, während es in dem Vollastschaltgetriebe 2 die Funktion eines Umschaltventiles zwischen den Schaltelementen SEV1 und SEV2 hat.

Konstruktiv ist das Steuerventil SV2 derart ausgebildet, daß es sieben Anschlußöffnungen 1" bis 7" aufweist, wobei die Anschlußöffnungen 1" und 2" zur Zufuhr von Druckmittel von dem Schaltventil SV1 dienen, die Anschlußöffnung 7" zum elektromagnetischen Ventil Y3 führt, welches das Steuerventil SV2 schaltet, die Anschlußöffnungen 4", 5" und 6" mit den Schaltelementen SEV1, SEV2 und SER verbindbar sind und die Öffnung 3" mit einem Tank 8 verbunden ist, über den der Druck von den Schaltelementen SEV1, SEV2, SER abführbar ist. Die Anschlußöffnung 4" ist bei beiden Getriebebauarten jeweils mit dem Schaltelement SEV1 zur Vorwärtsfahrt und die Anschlußöffnung 6" mit dem Schaltelement SER zur Rückwärts fahrt verbunden. Die Anschlußöffnung 5" des Steuerventiles SV2 ist derart ausgebildet, daß das Steuerventil SV2 sowohl in einem Synchro-Shuttle-Getriebe 1 nach Fig. 1 als auch in einem Lastschaltgetriebe 2 nach Fig. 2 eingesetzt werden kann.

Um diese Doppelfunktion zu ermöglichen, ist die Anschlußöffnung 5" durch zwei zusätzliche Steuertaschen im Gußteil (nicht dargestellt) und einem Absperrteil 9 ausgebildet.

Die prinzipielle Funktionsweise der Getriebesteuerung in dem jeweiligen Getriebe 1 oder 2 sei nachfolgend kurz beschrieben.

Bezug nehmend auf Fig. 1 ist ein mechanisches Synchro-Shuttle-Getriebe 1 dargestellt, bei dem für jede Fahrtrichtung ein Schaltelement SEV1 bzw. SER, welches z. B. als Kupplung ausgebildet ist, und mehrere Gangstufen zur Vorwärtsfahrt vorgesehen sind. Das Schaltventil SV1 dient bei dem dargestellten Synchro-Shuttle-Getriebe 1 zur Änderung der Fahrtrichtung, während das Steuerventil SV2 entweder die Gänge schaltet oder das Getriebe in einen Leerlauf bzw. in eine Neutralposition schaltet, indem es einen Druckmitteldurchfluß unterbindet, oder eines der Schaltelemente mit Druck beaufschlagt, indem es den Druckmitteldurchfluß zu dem Schaltelement SEV1 bzw. SER zuläßt. Die Fahrtrichtung selbst wird über das Schaltventil SV1 mittels der elektromagnetischen Ventile Y1 und Y2 eingestellt, wobei das elektromagnetische Ventil Y1 das Schaltventil SV2 derart schaltet, daß das Schaltelement SEV1 zur Vorwärtsfahrt betätigt wird und das elektromagnetische Ventil Y2 das Schaltventil SV2 so schaltet, daß das Schaltelement SER zur Rückwärtsfahrt mit Druckmittel beaufschlagbar ist.

Bei dem Synchro-Shuttle-Getriebe 1 kann der Fahrer einer Arbeitsmaschine beispielsweise durch einen Knopfdruck das Steuerventil SV2 über das elektromagnetische Ventil Y3 zum Gangwechseln während einer Fahrtrichtung in Neutralposition schalten, wonach der Fahrer in bekannter Weise das mechanische Schaltgetriebe zur Gangschaltung betätigen kann. Anschließend wird das Steuerventil SV2 in den Schaltzustand gebracht.

In Fig. 1 ist das Steuerventil SV2 in unbetätigtem Zustand, d. h. in Neutralstellung, dargestellt. Soll nun das Schaltelement SEV1 zur Vorwärtsfahrt betätigt werden, so wird das Schaltventil SV1 über die elektromagnetischen Ventile Y2 und Y1 nach links verschoben und das Steuerventil SV2 mittels des elektromagnetischen Ventiles Y3 nach rechts geschaltet. Soll die Fahrtrichtung geändert und das Schaltelement zur Rückwärtsfahrt SER betätigt werden, so wird analog das Schaltventil SV1 von den elektromagnetischen Ventilen Y1 und Y2 nach rechts geschaltet, und das Steuerventil SV2 bleibt in der wie vorstehend beschriebenen geschalteten Position.

Bei einem Synchro-Shuttle-Getriebe 1 nach Fig. 1 ist die Öffnung 5" des Steuerventiles SV2 durch das Absperrteil 9 gesperrt. Diese mit dem Zwischenblech 9 gesperrte Anschlußöffnung 5" ist in der Neutralstellungsposition des Steuerventiles SV2, wie in Fig. 1 dargestellt, mit der Anschlußöffnung 1" verbunden, wodurch eine Druckmitteldurchführung von dem Schaltventil SV1 durch das Steuerventil SV2 zu den Schaltelementen SEV1 oder SER gesperrt wird. In dieser Neutralstellung des Steuerventiles SV2 wird der Druck von dem Schaltelement SEV1 über eine Verbindung zwischen den Anschluß- bzw. Auslaßöffnungen 4" und 3" sowie vom Schaltelement SER über eine Verbindung zwischen den Anschlußöffnungen 6" und 3" in den Tank 8 abgeführt.

Für die Sperrung der Anschlußöffnung 5" des Steuerventiles SV2 bietet sich als Absperrteil 9 insbesondere ein Zwischenblech an, da es die konstruktiv einfachste und kostengünstigste Lösung darstellt.

Bezug nehmend auf Fig. 2 handelt es sich bei dem dargestellten Vollastschaltgetriebe 2 im Gegensatz zum Synchro-Shuttle-Getriebe 1 nach Fig. 1 um kein mechanisches Schaltgetriebe, bei dem zum Schalten das Getriebe in eine Neutralstellung gebracht werden muß bzw. ausgekuppelt werden muß. Da bei Lastschaltgetrieben unter Last geschaltet werden kann, ist eine Neutralstellungsschaltung des Steuerventiles SV2 nicht notwendig. Statt dessen wird über einen elektrischen Impuls zwischen einem Schaltelement SEV1 zur Vorwärtsfahrt und einem weiteren Schaltelement SEV2 zur Vorwärtsfahrt vom Fahrer umgeschaltet. Das Schaltelement SEV1 zur Vorwärtsfahrt kann beispielsweise für Gangstufen 1 bis 3 stehen und das Schaltelement SEV2 für eine weitere Gangstufe 4. Über weitere Schalt- bzw. Druckleitungen 10 und 11 können weitere unterschiedliche Vorwärtsgeschwindigkeitsbereiche eingestellt werden.

Wie bei dem Synchro-Shuttle-Getriebe nach Fig. 1 hat das Schaltventil SV1 die Funktion, die Fahrtrichtung einzustellen, wobei wiederum das elektromagnetische Ventil Y1 dazu dient, das Schaltventil SV1 zur Betätigung der Schaltelemente SEV1 und SEV2 zur Vorwärtsfahrt zu schalten, und das elektromagnetische Ventil Y2 das Schaltventil SV1 derart schaltet, daß das Schaltelement SER zur Rückwärtsfahrt betätigt wird.

Anstelle der Leerlaufstellung des Steuerventiles SV2 bei dem Synchro-Shuttle-Getriebe 1 nach Fig. 1 dient diese Schaltstellung des Steuerventiles SV2 bei dem Lastschaltgetriebe 2 zur Schaltung des weiteren Schaltelementes SEV2 zur Vorwärtsfahrt. D. h. wird das Steuerventil SV2, wie zur Fig. 1 beschrieben, nach rechts geschaltet, wird, je nach Schaltzustand des Schaltventiles SV1, das Schaltelement SEV1 zur Vorwärtsfahrt oder das Schaltelement SER zur Rückwärtsfahrt mit Druck beaufschlagt.

Anders als bei dem Synchro-Shuttle-Getriebe 1 ist in dem Lastschaltgetriebe 2 nach Fig. 2 die Anschlußöffnung 5" des Steuerventiles SV2 mit dem weiteren Schaltelement SEV2 zur Vorwärtsfahrt verbunden. Die Anschlußöffnung 5" ist somit geöffnet und über eine Verbindung zwischen der Anschlußöffnung 1" und der Öffnung 5" kann Druck von dem Schaltventil SV1 im dargestellten unbetätigten Zustand des Steuerventiles SV2 an das Schaltelement SEV2 weitergeleitet werden. Wird das Steuerventil SV2 nach Fig. 2 nun über das elektromagnetische Ventil Y3 derart geschaltet, daß ein Durchgang zwischen den Anschlußöffnungen 1" und 4" oder den Anschlußöffnungen 2" und 6" freigeschaltet wird, so wird anstelle des Schaltelementes SEV2 das Schaltelement SEV1 oder das Schaltelement SER betätigt, wobei jedoch vom Schaltventil SV1 nur über eine Leitung Druck zum Steuerventil SV2 geführt wird.

Durch die Doppelfunktion des Steuerventiles SV2 kann das Steuerventil SV2 mit identischer konstruktiver Ausgestaltung sowohl in dem Synchro-Shuttle-Getriebe 1 als auch in dem Lastschaltgetriebe 2 eingesetzt werden. Auch die übrigen Bauelemente, wie das Schaltventil SV1 und die elektromagnetischen Ventile Y1, Y2 und Y3 sowie die Schaltelemente SEV1, SEV2 und SER, können mit dieser einfachen Getriebesteuerung bei beiden Getriebebauarten verwendet werden.

Bei Lastschaltgetrieben bietet die beschriebene Getriebesteuerung des weiteren den Vorteil, daß die hydraulische Ansteuerung des zusätzlichen Schaltelementes SEV2 konstruktiv stark vereinfacht und somit sehr kostengünstig gestaltet werden kann.

Zudem ergibt sich bei dem Lastschaltgetriebe 2 durch eine derartige Getriebesteuerung noch ein weiterer Vorteil dahingehend, daß das Getriebe im Vergleich zu den aus dem Stand der Technik bekannten Bauarten wesentlich leichter schaltbar ist.

### Bezugszeichen

- 1: Synchro-Shuttle-Getriebe
- 2: Lastschaltgetriebe
- 3: externe Druckquelle
- 4: externe Druckquelle
- 5: Druckleitung
- 6: Zulauffilter
- 7: Tank
- 8: Tank
- 9: Absperrteil
- 10: Druckleitung
- 11: Druckleitung
- 1', 1": Anschlußöffnung
- 2', 2": Anschlußöffnung
- 3', 3": Anschlußöffnung
- 4', 4": Anschlußöffnung
- 5', 5": Anschlußöffnung
- 6', 6": Anschlußöffnung
- 7": Anschlußöffnung

- SEV1: Schaltelement für Vorwärtsfahrt
- SEV2: Schaltelement für Vorwärtsfahrt
- SER: Schaltelement für Rückwärtsfahrt
- SV1: Schaltventil
- SV2: Steuerventil
- Y1: elektromagnetisches Ventil
- Y2: elektromagnetisches Ventil
- Y3: elektromagnetisches Ventil

## Patentansprüche

1. Synchro-Shuttle-Getriebe (1) oder Lastschaltgetriebe (2), mit Schaltelementen (SEV1, SEV2, SER) für eine Vorwärts- oder Rückwärts fahrt und eine Getriebesteuerung mit Schalteinrichtungen (Y1, Y2) für die Betätigung eines Schaltventiles (SV1) zur Fahrtrichtungswahl, dadurch **gekennzeichnet**, daß zwischen den Schaltelementen für eine Vorwärtsfahrt (SEV1, SEV2) bzw. eine Rückwärtsfahrt (SER) und dem von den Schalteinrichtungen (Y1, Y2) betätigbaren Schaltventil (SV1) zur Fahrtrichtungswahl ein einziges Steuerventil (SV2) angeordnet ist, das über eine weitere Schalteinrichtung (Y3) betätigbar ist, wobei das Steuerungsventil (SV2) zur Verbindung mit den Schaltelementen (SEV1, SER) Anschlußöffnungen (4", 5", 6") aufweist, wobei eine Anschlußöffnung (5") bei einem Synchro-Shuttle-Getriebe (1) zur Sperrung des Druckmitteldurchflusses durch das Steuerventil (SV2) durch ein Absperrteil (9) gesperrt ist und bei einem Lastschaltgetriebe (2) mit einem weiteren Schaltelement (SEV2) verbunden ist.

2. Getriebe und Getriebesteuerung nach Anspruch 1, dadurch **gekennzeichnet**, daß das Steuerventil (SV2) Anschlußöffnungen (1", 2") zur Zufuhr von Druckmitteln von dem Schaltventil (SV1), eine mit einem Tank (8) verbindbare Anschlußöffnung (3") und mit Schaltelementen (SEV1, SEV2, SER) verbindbare Anschlußöffnungen (4", 5", 6") aufweist.

3. Getriebe und Getriebesteuerung nach den Ansprüchen 1 und 2, dadurch **gekennzeichnet**, daß bei einem Synchro-Shuttle-Getriebe (1) die Schaltelemente (SEV1, SER) für Vorwärts- bzw. Rückwärtsfahrt im auf Druckmitteldurchfluß geschalteten Zustand des Steuerventiles (SV2) in Abhängigkeit von der Stellung des Schaltventiles (SV1) geschaltet sind und in einer eine Neutralstellung darstellenden Schaltstellung mit gesperrtem Druckmitteldurchfluß durch das Steuerventil (SV2) über die mit einem Tank (8) verbindbare Anschlußöffnung (3") von Druck entspannbar sind.

4. Getriebe und Getriebesteuerung nach Anspruch 1, dadurch **gekennzeichnet**, daß die Neutralstellung des Steuerventiles (SV2) bei einem Synchro-Shuttle-Getriebe (1) der Stellung zur Schaltung des weiteren Schaltelementes (SEV2) bei einem Lastschaltgetriebe (2) entspricht.

5. Getriebe und Getriebesteuerung nach Anspruch 1, dadurch **gekennzeichnet**, daß die Schalteinrichtungen (Y1, Y2, Y3) zum Betätigen des Schaltventiles (SV1) bzw. des Steuerventiles (SV2) als elektromagnetische Ventile ausgebildet sind.

6. Getriebe und Getriebesteuerung nach Anspruch 5, dadurch **gekennzeichnet**, daß das elektromagnetische Ventil (Y1) das Schaltventil (SV1) derart betätigt, daß wenigstens ein Schaltelement (SEV1) für eine Vorwärtsfahrt schaltbar ist, und daß das elektromagnetische Ventil (Y2) das Schaltventil (SV1) derart betätigt, daß das Schaltelement (SER) für eine Rückwärtsfahrt schaltbar ist.

7. Getriebe und Getriebesteuerung nach Anspruch 1, dadurch **gekennzeichnet**, daß die Schaltelemente (SEV1, SEV2, SER) mit Druck aus einer externen Druckquelle (3) beaufschlagbar sind und die elektromagnetischen Ventile (Y1, Y2, Y3) mit einem anderen Druck aus einer weiteren Druckquelle (4) beaufschlagbar sind.

## Claims

1. Synchro-shuttle transmission (1) or power shift transmission (2), having shift elements (SEV1, SEV2, SER) for forward or reverse motion, and a transmission controller having shift devices (Y1, Y2) for the operation of a shift valve (SV1) for driving direction selection, **characterized** in that disposed between the shift elements for forward motion (SEV1, SEV2) or reverse motion (SER) and the shift valve (SV1) for driving direction selection operable by the shift devices (Y1, Y2) is a single control valve (SV2), which is operable by means of a further shift device (Y3), wherein the control valve (SV2) for connection to the shift elements (SEV1, SER) has supply openings (4", 5", 6"), wherein one supply opening (5") in a synchro-shuttle transmission (1), for blocking the pressure medium flow through the control valve (SV2), is blocked by a shut-off part (9) and in a power shift transmission (2) is connected to a further shift element (SEV2).

2. Transmission and transmission controller according to claim 1, **characterized** in that the control valve (SV2) has supply openings (1", 2") for the supply of pressure media from the shift valve (SV1), a supply opening (3") connectable to a tank (8) and supply openings (4", 5", 6") connectable to shift elements (SEV1, SEV2, SER).

3. Transmission and transmission controller according to claims 1 and 2, **characterized** in that in a synchro-shuttle transmission (1) the shift elements (SEV1, SER) for forward or reverse motion, in the pressure medium flow-enabling state of the control valve (SV2), are operated in dependence upon the position of the shift valve (SV1) and, in a position representing a neutral position with the pressure medium flow blocked by the control valve (SV2), may be relieved of pressure via the supply opening (3") connectable to a tank (8).

4. Transmission and transmission controller according to claim 1, **characterized** in that the neutral position of the control valve (SV2) in a synchro-shuttle transmission (1) corresponds to the position for operation of the further shift element (SEV2) in a power shift transmission (2).

5. Transmission and transmission controller according to claim 1, **characterized** in that the shift devices (Y1, Y2, Y3) for operation of the shift valve (SV1) or control valve (SV2) take the form of solenoid valves.

6. Transmission and transmission controller according to claim 5, **characterized** in that the solenoid valve (Y1) operates the shift valve (SV1) in such a way that at least one shift element (SEV1) for forward motion is operable, and that the solenoid valve (Y2) operates the shift valve (SV1) in such a way that the shift element (SER) for reverse motion is operable.

7. Transmission and transmission controller according to claim 1, **characterized** in that the shift elements (SEV1, SEV2, SER) are loadable by pressure from an external pressure source (3) and the solenoid valves (Y1, Y2, Y3) are loadable by another pressure from a further pressure source (4).

## Revendications

1. Boîte de vitesses synchronisées (1) ou boîte de vitesses commandée sous charge (2), comprenant des éléments de commande (SEV1, SEV2, SER) pour la marche avant ou la marche arrière et une commande de boîte de vitesses munie de dispositifs de commande (Y1, Y2) pour l'actionnement d'une valve de commande (SV1 ) pour la sélection du sens de marche, **caractérisée en ce** qu'entre les éléments de commande pour la marche avant (SEV1, SEV2), respectivement pour la marche arrière (SER) et la valve de commande (SV1) pour la sélection du sens de marche, qui peut être actionnée par les dispositifs de commande (Y1, Y2), est intercalée une unique valve de régulation (SV2) qui peut être actionnée par un autre dispositif de commande (Y3), la valve de régulation (SV2) présentant, pour la liaison avec les éléments de commande (SEV1, SER), des orifices de raccordement (4", 5", 6"), un orifice de raccordement (5") étant fermé par un élément de fermeture (9), dans une boîte de vitesses synchronisée, pour assurer l'arrêt du passage du fluide sous pression par la valve de régulation (SV2), et, étant relié à un autre élément de commande (SEV2), dans une boîte de vitesses commandée sous charge (2).

2. Boîte de vitesses et commande de boîte de vitesses selon la revendication 1, **caractérisée en ce que** la valve de régulation (SV2) présente des orifices de raccordement (1", 2") pour l'acheminement de fluide sous pression en provenance de la valve de commande (SV1), un orifice de raccordement (3") pouvant être relié à un réservoir (8) et des orifices de raccordement (4", 5", 6") pouvant être reliés à des éléments de commande (SEV1, SEV2, SER).

3. Boîte de vitesses et commande de boîte de vitesses selon les revendications 1 et 2, **caractérisée en ce que**, dans une boîte de vitesses synchronisée, les éléments de commande (SEV1, SER) pour la marche avant, respectivement la marche arrière sont commutés, lors du passage du fluide sous pression, dans l'état commuté de la valve de régulation (SV2), en fonction de la position de la valve de commande (SV1), et en ce que dans une position de commande qui représente une position de point mort, avec passage du fluide sous pression à travers la valve de régulation (SV2) fermée, ils peuvent être déchargés de la pression par l'intermédiaire de l'orifice de raccordement (3") qui peut être relié à un réservoir (8).

4. Boîte de vitesses et commande de boîte de vitesses selon la revendication 1, **caractérisée en ce que**, dans une boîte de vitesses synchronisée (1), la position de point mort de la valve de régulation (SV2) correspond à la position déterminant la commutation de l'élément de commande (SEV2) suivant dans une boîte de vitesses commandée sous charge (2).

5. Boîte de vitesses et commande de boîte de vitesses selon la revendication 1, **caractérisée en ce que** les dispositifs de commande (Y1, Y2, Y3) destinés à l'actionnement de la valve de commande (SV1), respectivement de la valve de régulation (SV2) sont constitués par des valves électromagnétiques.

6. Boîte de vitesses et commande de boîte de vitesses selon la revendication 5, **caractérisée en ce que** la valve électromagnétique (Y1) actionne la valve de commande (SV1) de telle manière qu'au moins un élément de commande (SEV1) pour la marche avant puisse être commuté, et en ce que la valve électromagnétique (Y2) actionne la valve de commande (SV1) de manière que l'élément de commande (SER) pour la marche arrière puisse être commuté.

7. Boîte de vitesses et commande de boîte de vitesses selon la revendication 1, **caractérisée en ce que** les éléments de commande (SEV1, SEV2, SER) peuvent être chargés par une pression issue d'une source de pression externe (3) et les valves électromagnétiques (Y1, Y2, Y3) peuvent être chargées avec une autre pression issue d'une autre source de pression (4).
